Europäisches Patentamt

European Patent Office

Office européen des brevets

(11) Veröffentlichungsnummer: **0 542 133 A1**

## EUROPÄISCHE PATENTANMELDUNG

(21) Anmeldenummer: **92118950.2**

(22) Anmeldetag: **05.11.92**

(51) Int. Cl.[5]: **B01J** **13/18**, C08K 9/10, B41M 5/165

(30) Priorität: **15.11.91 DE 4137619**

(43) Veröffentlichungstag der Anmeldung: **19.05.93 Patentblatt 93/20**

(84) Benannte Vertragsstaaten: **BE CH DE ES FR GB IT LI NL SE**

(71) Anmelder: **BASF Aktiengesellschaft Carl-Bosch-Strasse 38 W-6700 Ludwigshafen(DE)**

(72) Erfinder: **Jahns, Ekkehard, Dr. G-Nadler-Strasse 1 W-6945 Hirschberg(DE)** Erfinder: **Dyllick-Brenzinger, Rainer, Dr. Weinheimer Strasse 44 W-6940 Weinheim(DE)** Erfinder: **Raulfs, Friedrich-Wilhelm, Dr. Brandenburger Strasse 6 W-6703 Limburgerhof(DE)** Erfinder: **Biastoch, Ralf, Dr. Wimphelingstrasse 21 W-6720 Speyer(DE)**

(54) **Mikrokapseln mit Feststoff-Kern.**

(57) Mikrokapseln mit Feststoff-Kern, erhältlich durch Suspensionspolymerisation von
   A) 30 bis 100 Gew.-% eines oder mehrerer Vinylmonomerer (Monomere I),
   B) 0 bis 70 Gew.-% eines oder mehrerer bi- oder polyfunktioneller Monomerer (Monomere II) und
   C) 0 bis 40 Gew.-% sonstiger Monomerer (Monomerer III),
wobei die Feststoffteilchen, die Monomeren und ein oder mehrere öllösliche Radikalstarter in Wasser dispergiert werden und die Polymerisation auf übliche Weise durch den thermischen Zerfall des Radikalstarters ausgelöst und gesteuert wird,
sowie Herstellung und Verwendung dieser Mikrokapseln.

Die vorliegende Erfindung betrifft neue Mikrokapseln mit Feststoff−Kern, erhältlich durch Suspensionspolymerisation von

A) 30 bis 100 Gew.−% eines oder mehrerer Vinylmonomerer (Monomere I),

B) 0 bis 70 Gew.−% eines oder mehrerer bi− oder polyfunktioneller Monomerer (Monomere II) und

C) 0 bis 40 Gew.−% sonstiger Monomerer (Monomere III),

wobei die Feststoffteilchen, die Monomeren und ein oder mehrere öllösliche Radikalstarter in Wasser dispergiert werden und die Polymerisation auf übliche Weise durch den thermischen Zerfall des Radikalstarters ausgelöst und gesteuert wird.

Außerdem betrifft die Erfindung ein Verfahren zur Herstellung dieser Mikrokapseln sowie deren Verwendung zur Herstellung von Druck− und Anstrichfarben und Lacken, zur Herstellung von Tonern für die Elektrophotographie, zum Färben von Kunststoffen und Kunstfasern und zur Herstellung von wärmeempfindlichen Aufzeichnungsmaterialien.

Mikroverkapselte Feststoffe sind an sich bekannt. Dabei handelt es sich insbesondere um Metalle, Metalloxide, Pigmente, Farbbildner sowie weitere anorganische oder organische Teilchen, die zur Agglomeration neigen oder deren Oberflächeneigenschaften für den jeweiligen Verwendungszweck vereinheitlicht werden sollen. Sie werden in vielen Bereichen der Technik eingesetzt, beispielsweise bei der Herstellung von Druckfarben und Lacken, von wärmeempfindlichen Aufzeichnungsmaterialien und von Tonern für die Elektrophotographie.

In den US−A−4 421 660, 4 680 200 und 4 771 086 sind mikroverkapselte Feststoffe beschrieben, bei denen die Verkapselung durch Polymerisation von hydrophoben Monomeren, insbesondere Vinylmonomeren, mit wasserlöslichen Radikalstartern in wäßrigen Dispersionen erfolgt. Bei dieser Emulsionspolymerisation ist es jedoch von Nachteil, daß unvermeidbar ein mehr oder weniger großer Anteil von Polymerteilchen anfällt, die keine Feststoffpartikel umhüllen.

Aus der DE−A−40 15 753 ist ein Verfahren zur Herstellung von Mikrokapseln, die in Kernölen gelöste Farbbildner enthalten, bekannt. Die Polymerisation wird hierbei unter Verwendung von öllöslichen Radikalstartern in einer Öl−in−Wasser−Emulsion durchgeführt. Die eingesetzten Vinylmonomere lösen sich im hydrophoben Kernlösemittel, während das entstehende Polymere unlöslich ist und nach einer Phasentrennung die stabile Kapselwand um den flüssigen Kern bildet.

Der Erfindung lag die Aufgabe zugrunde, mikroverkapselte Feststoffteilchen bereitzustellen, die sich durch gute anwendungstechnische Eigenschaften auszeichnen und bei deren Herstellung nicht die obengenannten Nachteile auftreten.

Demgemäß wurden die eingangs definierten Mikrokapseln mit Feststoff−Kern gefunden.

Weiterhin wurde das hierdurch definierte Verfahren zur Herstellung dieser Mikrokapseln sowie ihre Verwendung zur Herstellung von Druck− und Anstrichfarben und Lacken, zur Herstellung von Tonern für die Elektrophotographie, zum Färben von Kunststoffen und Kunstfasern und zur Herstellung von wärmeempfindlichen Aufzeichnungsmaterialien gefunden.

Die erfindungsgemäßen Feststoffteilchen umhüllenden Mikrokapseln werden aus 30 bis 100 Gew.−%, vorzugsweise 40 bis 100 Gew.−% eines oder mehrerer Vinylmonomerer (Monomere I) hergestellt.

Außerdem können die erfindungsgemäßen Mikrokapseln aus bis zu 70 Gew.−%, bevorzugt bis zu 40 Gew.−% eines oder mehrerer bi− oder polyfunktioneller Monomerer (Monomere II) und aus bis zu 40 Gew.−%, vorzugsweise bis zu 30 Gew.−% sonstiger Monomerer (Monomere III) mitaufgebaut sein.

Bei den Monomeren I und II handelt es sich um hydrophobe ungesättigte Verbindungen, die jeweils einzeln oder auch in Form von Gemischen eingesetzt werden können.

Geeignete Vinylmonomere I sind beispielsweise:

− Monovinylaromaten wie Styrol und seine durch Halogen oder $C_1−C_{10}$−Alkyl substituierten Derivate, beispielsweise Vinyltoluol, $\alpha$− und $\beta$−Methylstyrol, n− und tert.−Butylstyrol, Chlorstyrol und Vinyl−pyridin;

− $C_1−C_{24}$−Alkylester von $\alpha,\beta$−ungesättigten $C_3−C_{10}$−Carbonsäuren, insbesondere von Acryl− und Methacrylsäure, wie vor allem Methyl−, Ethyl−, n−Propyl−, n−Butyl− und 2−Ethylhexylacrylat und −methacrylat, auch Isopropyl−, Isobutyl−, sec.−Butyl− und tert.−Butylacrylat und −methacrylat, daneben n−Pentyl−, n−Hexyl−, n−Heptyl−, n−Octyl− und Laurylacrylat und −methacrylat;

− Vinylester von $C_2−C_{20}$−Carbonsäuren wie Vinylacetat und Vinylpropionat;

− Vinylhalogenide wie Vinylchlorid und Vinylidenchlorid;

− $C_4−C_{10}$−Alkandiene wie Butadien und Isopren.

Bevorzugte Monomere I sind Styrol, Methyl−, Ethyl−, n−Propyl−, n−Butyl− und 2−Ethylhexylacrylat und/oder −methacrylat.

Als Monomere II kommen bi − und polyfunktionelle Monomere, vornehmlich Divinyl − und Polyvinyl − monomere, in Betracht, die eine Vernetzung der Kapselwand während der Polymerisation bewirken. Durch die Vernetzung wird die Polymerhülle der Feststoffe schwer schmelzbar und erhält damit eine wesentlich bessere Temperaturstabilität. Gleichzeitig ist sie auch gegen den Angriff von Lösungsmitteln, die die unvernetzten Polymere lösen würden, stabil.

Geeignete Divinylmonomere sind beispielsweise:
- Divinylaromaten wie Divinylbenzol;
- Diacrylate und Dimethacrylate von $C_2 − C_{20}$ − Alkandiolen wie vor allem 1,3 − und 1,2 − Propandiol −, 1,4 − Butandiol −, 1,5 − Pentandiol − und 1,6 − Hexandioldiacrylat und − dimethacrylat, auch Ethandiol − und 1,3 − Butandioldiacrylat und − dimethacrylat, daneben Dipropylenglykoldiacrylat, Ethyldiglykoldiacrylat und Tripropylenglykoldiacrylat;
- $\alpha,\beta$ − ungesättigte $C_3 − C_{10}$ − Alkylester von $\alpha,\beta$ − ungesättigten $C_3 − C_{10}$ − Carbonsäuren und − Carbonsäurederivaten wie Allylmethacrylat und Methallylmethacrylamid;
- $C_4 − C_{10}$ − Alkan − 1,3 − diene wie Butadien.

Bevorzugte Divinylmonomere sind Ethandioldiacrylat und − dimethacrylat, 1,3 − Butandioldimethacrylat, Methallylmethacrylamid und Allylmethacrylat. Besonders bevorzugt sind 1,3 − und 1,2 − Propandiol −, 1,4 − Butandiol −, 1,5 − Pentandiol − und 1,6 − Hexandioldiacrylat und − dimethacrylat und Divinylbenzol.

Bevorzugte Polyvinylmonomere sind Trimethylolpropantriacrylat und − trimethacrylat, Pentaerythrittri − allylether und − triacrylat sowie Pentaerythrittetraacrylat und − tetramethacrylat.

Als zusätzliche Monomere III kommen hydrophile ungesättigte Verbindungen in Betracht. Geeignete Monomere III sind beispielsweise:
- $\alpha,\beta$ − ungesättigte $C_2 − C_6$ − Carbonsäuren und deren Derivate wie Salze, Amide, Nitrile und Ester; z.B. Acrylsäure, Methacrylsäure, Maleinsäure, Itaconsäure; Natriumacrylat; Acryl − und Methacrylamid, 3 − Dimethylaminopropylacryl − und − methacrylamid und Acrylamido − 2 − methylpropansulfonsäure;
- Acryl − und Methacrylnitril; 2 − Hydroxyethyl − und 3 − Hydroxypropylacrylat und − methacrylat; 2 − Aminoethylacrylat und − methacrylat, 2 − Dimethylamino − und 2 − Diethylaminoethylacrylat und − methacrylat und Glycidylacrylat und − methacrylat, 2 − Sulfoethyl − und 3 − Sulfopropylacrylat und − methacrylat;
- aromatische hydrophile Vinylverbindungen wie N − Vinylpyrrolid − 2 − on und Styrolsulfonsäure;
- Tetraalkyl/arylammoniumverbindungen, die $\alpha,\beta$ − ungesättigte Gruppen enthalten, wie Vinylbenzyltri − methylammoniumchlorid.

Die erfindungsgemäßen Feststoffteilchen umhüllenden Mikrokapseln werden durch Suspensionspoly − merisation der Monomeren I und gewünschtenfalls der Monomeren II und/oder III in wäßrigem Medium hergestellt, in dem die Monomeren dispergiert sind. Die hierbei eingesetzten Radikalstarter sind öllöslich und starten sowie steuern die Polymerisation auf bekannte Weise durch ihren thermischen Zerfall.

Als Radikalstarter können die üblichen öllöslichen Peroxo − und Azoverbindungen, zweckmäßigerweise in Mengen von 0,1 bis 5 Gew. − %, bezogen auf das Gewicht der Monomeren, verwendet werden, die einzeln oder auch als Gemische eingesetzt werden können.

Bevorzugte Radikalstarter sind tert. − Pentylperoxypivalat, Dilauroylperoxid, tert. − Pentyl − 2 − ethylhe − xanoat, Dibenzoylperoxid, tert. − Butylperoxy − 2 − ethylhexanoat, Di − tert. − butylperoxid, 2,5 − Dimethyl − 2,5 − di(tert. − butylperoxy)hexan, Cumolhydroperoxid, 2,2' − Azobis(4 − methoxy − 2,4 − dimethylvaleronitril); 2,2' − Azobis(2,4 − dimethylvaleronitril) und 2,2' − Azobis(2 − methylbutyronitril).

Besonders bevorzugt sind tert. − Butylperoxyneodecanoat, Di(3,5,5 − trimethylhexanoyl)peroxid, tert. − Butylperoxypivalat, 4,4' − Azobisisobutyronitril und Dimethyl − 2,2' − azobisisobutyrat. Diese weisen in einem Temperaturbereich von 30 bis 100˚C eine Halbwertszeit von 10 Stunden auf.

Bei der erfindungsgemäßen Polymerisation kann es vorteilhaft sein, das Molekulargewicht der entste − henden Polymeren zu regeln. Dies kann in bekannter Weise durch Zusatz kettenübertragender Reagenzien während der Polymerisation geschehen. Hierfür geeignete Substanzen sind zum Beispiel aliphatische Alkohole wie Methanol, Isopropanol und 1 − Buten − 2 − ol, Tetrachlorkohlenstoff und Mercaptane wie tert. − Dodecylmercaptan und Thioglykolsäureester wie Ethyl − und 2 − Ethylhexylthioglykolat.

Für die erfindungsgemäße Mikroverkapselung können prinzipiell alle Feststoffe, sowohl anorganische als auch organische, eingesetzt werden, die unter den Reaktionsbedingungen in Wasser nicht oder nur schwer löslich sind und mit den weiteren Reaktionspartnern nicht reagieren. Selbstverständlich sollte die Größe der Feststoff − Teilchen in einem für Mikrokapseln üblichen Bereich liegen, d.h. etwa bei 10 nm bis 100 $\mu$m. Die bevorzugten Teilchengrößen hängen vom jeweiligen Verwendungszweck ab. Generell können jedoch nach dem erfindungsgemäßen Verfahren auch größere Teilchen verkapselt werden.

Geeignete anorganische Feststoffe sind beispielsweise Metalle, wie Aluminium, Blei, Eisen, Kobalt, Nickel, Chrom, Kupfer, Silber, Gold, Palladium, Platin, Rhodium und Zink sowie deren Legierungen und bevorzugt Metalloxide, wie neben Siliciumdioxid und Magnesiumoxid vor allem magnetische Oxide (zum Beispiel Magnetit, Nickel − und Kobaltoxid) und als Pigmente wirkende Oxide genannt werden sollen.

Für die erfindungsgemäße Mikroverkapselung besonders bevorzugt sind Farbmittel, d.h. anorganische und organische Pigmente, Farbstoffe, die nur zu einem gewissen Prozentsatz (etwa bis zu 10 Gew. − %) in Wasser löslich sind, sowie Farbbildner (das sind Verbindungen, die selbst farblos oder kaum gefärbt sind und ihre Farbe in Kontakt mit einem Elektronenakzeptor durch Abgabe eines Elektrons oder Aufnahme eines Protons entwickeln). Dabei sind beispielsweise die üblichen für die Herstellung von Druckfarben und Lacken, für die Elektrophotographie, für die Textilfärberei und den Textildruck eingesetzten Pigmente und die in wärme − und druckempfindlichen Aufzeichnungsmaterialien verwendeten Farbbildner geeignet.

Im einzelnen seien beispielsweise genannt:
- anorganische Pigmente wie:
  Titandioxid, Zinkweiß, Zinksulfid, Lithopone und Bleiweiß;
  Eisenoxidschwarz, Eisen − Mangan − Schwarz, Spinellschwarz und Ruß;
  Chrom − , Chromoxid − und Chromoxidhydratgrün und Ultramaringrün;
  Kobaltblau, Ultramarinblau, Eisenblau und Manganblau;
  Ultramarinviolett, Kobaltviolett und Manganviolett;
  Eisenoxidrot, Cadmiumsulfoselenid, Molybdatrot und Ultramarinrot;
  Eisenoxidbraun, Mischbraun, Spinell − und Korundphasen und Chromorange;
  Eisenoxidgelb, Nickeltitangelb, Chromtitangelb, Cadmiumsulfid, Chromgelb, Zinkgelb, Erdalkalichro − mate und Neapelgelb;
  Cadmiumzinksulfid;
- organische Pigmente wie:
  Azopigmente:
  Monoazopigmente wie C.I. Pigment Yellow 1, 3, 98, 74 und 10;
  Disazopigmente wie C.I. Pigment Yellow 12, 13, 14, 17, 16, 113, 81 und 83 und C.I. Pigment Orange 13, 17 und 34;
  β − Naphtholpigmente wie C.I. Pigment Red 1 und 3 und C.I. Pigment Orange 5;
  verlackte Azopigmente wie C.I. Pigment Red 49, 23, 53, 24 und 68, C.I. Pigment Red 57: 1, 48 und 52, C.I. Pigment Yellow 61 und C.I. Pigment Red 151;
  Naphthol AS − Pigmente wie C.I. Pigment Red 112, 8, 17, 26, 22, 27, 12, 7, 28, 9 und 29, C.I. Pigment Orange 38 und 30 und C.I. Pigment Red 146, 31, 170, 32 und 187;
  Benzimidazolonpigmente wie C.I. Pigment Yellow 120, C.I. Pigment Orange 36, C.I. Pigment Red 175 und 176, C.I. Pigment Violet 32 und C.I. Pigment Brown 25;
  Metallkomplexpigmente:
  Azometallkomplexpigmente wie C.I. Pigment Green 10;
  Isoindolinpigmente wie C.I. Pigment Yellow 109, 110 und 185 und C.I. Pigment Red 180;
  Phthalocyaninpigmente wie vor allem Kupferphthalocyanine wie vorzugsweise C.I. Pigment Blue 15;
  Chinacrodonpigmente wie C.I. Pigment Violet 19 und C.I. Pigment Red 122 und 209;
  Perinonpigmente wie C.I. Pigment Orange 43 und 68 und C.I. Pigment Red 194 und 67;
  Perylenpigmente wie C.I. Pigment Brown 26 und C.I. Pigment Red 179, 190, 123, 149, 178 und 189;
  Anthrachinonpigmente wie C.I. Pigment Violett 5:1, C.I. Pigment Yellow 123 und 108, C.I. Pigment Red 177 und C.I. Pigment Blue 60 und 64, C.I. Pigment Yellow 24 und 74, C.I. Pigment Orange 40 und C.I. Pigment Red 168;
  Thioindigopigmente wie C.I. Pigment Red 88, 181 und 198 und C.I. Pigment Violet 36 und 38;
  Dioxazinpigmente wie C.I. Pigment Violet 23, 88, 89 und 91;
  Alkaliblaupigmente;
  Chinophthalonpigmente;
  Fluoreszenzpigmente wie C.I. Solvent Yellow 44, C.I. Pigment Yellow 101 und C.I. Basic Violet 10.
- Farbbildner:
  Lactone wie Kristallviolettlacton;
  Phthalide wie 3,3 − Bis(p − dimethylaminophenyl) − 6 − dimethylaminophthalid;
  Fluorane wie 2 − Anilino − 3 − methyl − 6 − diethylaminofluoran,
  2 − Anilino − 3 − methyl − 6 − dibutylaminofluoran,
  2 − Anilino − 3 − methyl − 6 − isopentylethylaminofluoran,
  2 − Anilino − 3 − methyl − 6 − cyclohexylmethylaminofluoran,
  2 − (2' − Chlorphenylamino) − 6 − diethylaminofluoran und
  2 − (2' − Chlorphenylamino) − 6 − dibutylaminofluoran.

Bei den erfindungsgemäßen Mikrokapseln beträgt das Gewichtsverhältnis von Feststoff zu der Summe der Monomeren I, II und III in der Regel zwischen etwa 10:1 und 1:10. Die im Einzelfall benötigte Menge an Monomer hängt von der gewünschten Anwendung und natürlich besonders von der Größe der Feststoff‐partikel ab. Mindestens muß die für eine monomolekulare Bedeckung der gesamten Oberfläche des feinverteilten Feststoffs erforderliche Menge an Monomer eingesetzt werden, die mit Hilfe bekannter Formeln zu berechnen ist. Im allgemeinen weisen die Polymerhüllen Dicken bis etwa 10 $\mu$m auf.

Für die erfindungsgemäße Mikroverkapselung muß der Feststoff in Wasser fein dispergiert sein. Die Dispergierung kann in einer Weise, wie sie beispielsweise für Pigmente üblich ist, erfolgen. Dabei wird das Pigment zweckmäßigerweise in Gegenwart von Wasser und einem oder mehreren Dispergierhilfsmitteln zunächst in einem Dissolver vordispergiert. Da bei farbgebenden Pigmenten zur Erzielung hoher Farbstär‐ken die mittleren Durchmesser der Pigmentteilchen unter 1 $\mu$m liegen sollten, wird meistens eine übliche weitere Dispergierung beispielsweise in einer Rührwerkskugelmühle oder einer Perlmühle angeschlossen. In einigen Fällen kann auch auf die Vordispergierung verzichtet werden.

Als Dispergierhilfsmittel eignen sich dabei die üblicherweise verwendeten wasserlöslichen nichtioni‐schen und ionischen Polymere (die beide auch als Schutzkolloide bezeichnet werden) sowie nichtionische, kationische und anionische Tenside.

Die Auswahl geeigneter Dispergierhilfsmittel ist im Einzelfall zu treffen und wird durch den jeweils zu verkapselnden Feststoff bestimmt. Entscheidungskriterien sind z.B. leichte Dispergierbarkeit des Feststoffs in Wasser bis auf die gewünschte Teilchengröße, hoher Feststoffgehalt der Dispersion bei niedriger Viskosität vor und nach der Mikroverkapselung und gute Lagerstabilität der Dispersionen nach der Mikroverkapselung.

Bevorzugte wasserlösliche nichtionische Dispergierhilfsmittel sind beispielsweise Polyvinylalkohol, partiell hydrolysierte Polyvinylacetate, Polyvinylpyrrolidon und seine Copolymere wie Vinylpyrrolidon/Vinylacetat‐Copolymere, Polyacryl‐ und ‐methacrylamid und Copolymere, die die je‐weiligen Monomeren enthalten, Cellulosederivate wie Hydroxyethyl‐, Carboxymethyl‐ und Methylcellulo‐se, Gelatine und Gummi arabicum sowie deren Gemische.

Die nichtionischen Polymere werden in der Regel in Mengen von 0,1 bis 2000 Gew.‐%, vorzugsweise 0,5 bis 1000 Gew.‐%, bezogen auf den zu verkapselnden Feststoff, eingesetzt.

Als wasserlösliche ionische Dispergierhilfsmittel eignen sich insbesondere Polyacryl‐ und ‐methacrylsäure und Copolymere, die die jeweiligen Monomeren enthalten, Copolymere auf der Basis von Maleinsäure und deren Anhydrid, z.B. mit Methylvinylether, Diisobuten und Styrol, Polymere von Sulfoethyl‐ und Sulfopropylacrylat und ‐methacrylat, N‐Sulfoethyl‐maleinimid, 2‐Acrylamido‐2‐alkylsulfonsäuren, Styrol‐ und Vinylsulfonsäure und Copolymere dieser Monomeren. Besonders bevorzugt sind dabei Naphthalinsulfonsäure/Formaldehyd‐Kondensate, Phenolsulfonsäure/Formaldehyd‐Kondensate und Polyacryl‐ und Polymethacrylsäure.

Die eingesetzte Menge an ionischen Polymeren beträgt im allgemeinen 0,1 bis 1000 Gew.‐%, vorzugsweise 0,5 bis 500 Gew.‐%, bezogen auf den zu verkapselnden Feststoff.

Weiterhin können auch Tenside als zusätzliche Dispergierhilfsmittel zugesetzt werden. Geeignete nichtionische Tenside sind zum Beispiel Sorbitanester wie Sorbitanlaurat, Alkyl‐ oder Arylpolyglykolether wie Dodecylpolyglykolether (mit 18 Ethylenoxid‐Einheiten). Als kationische Tenside seien beispielsweise Alkylammonium‐ und Alkylpyridiniumsalze wie Cetyltrimethylammoniumbromid und Laurylpyridiniumchlo‐rid genannt. Als anionische Tenside eignen sich zum Beispiel Alkyl‐ und Alkylarylsulfate und ‐sulfonate wie Natriumlaurylsulfat und ‐nonylphenylsulfonat, Alkylpolyglykolether und Alkylphenolpolyglykolethersul‐fate und ‐sulfonate wie Natriumlaurylpolyglykolethersulfat und ‐nonylphenolpolyglykolethersulfonat (jeweils mit 50 EO‐Einheiten), Alkylsulfosuccinate wie Natriumdioctylsulfosuccinat und Alkalimetallsalze von Fettsäuren wie Kaliumdodecanoat.

Die Tenside werden in der Regel in Mengen von 0,1 bis 100 Gew.‐%, bevorzugt 0,5 bis 50 Gew.‐%, bezogen auf den zu verkapselnden Feststoff, zugesetzt.

Je nach Art und Dauer der Dispergierung kann die Größenverteilung der Feststoffteilchen auf den jeweiligen Verwendungszweck abgestimmt werden. In der Regel haben die Teilchen Größen von etwa 10 nm bis 100 $\mu$m.

Bei dem erfindungsgemäßen Verfahren zur Mikroverkapselung kann man an sich wie üblich vorgehen: Der Feststoff wird mit den Dispergierhilfsmitteln in Wasser dispergiert vorgelegt. Die anschließende Monomerenzugabe kann in einem Schritt erfolgen, die Monomeren können aber auch während der Polymerisation nach und nach zudosiert werden, was besonders günstig ist, wenn man einen schichtartigen Aufbau der Polymerhülle erreichen will. Den Radikalstarter bzw. das Radikalstartergemisch und gewünsch‐tenfalls den Regler kann man ebenfalls direkt mit den Monomeren oder nach und nach zugeben. Es ist auch möglich, die Dispergierung nach Zusatz von Monomeren und Starter fortzusetzen.

Die Dispersion wird dann unter intensivem Rühren auf die Temperatur erhitzt, bei der der Radikalstarter in ausreichenden Mengen zerfällt. Bei dieser Temperatur wird dann die Polymerisation durchgeführt. Es kann auch günstig sein, die Temperatur des Gemisches anschließend ebenfalls unter Rühren noch für einige Stunden leicht weiter zu erhöhen.

In der Regel führt man die Polymerisation bei 20 bis 100°C, vorzugsweise bei 40 bis 80°C durch.

Zweckmäßigerweise wird die Polymerisation bei Normaldruck vorgenommen, man kann jedoch auch bei vermindertem oder leicht erhöhtem Druck arbeiten, also etwa im Bereich von 0,5 bis 5 bar.

Wie aus den US−A−4 421 660 und 4 680 200 bekannt, ist es auch möglich, vor und während der Polymerisation Ultraschall auf die Dispersion einwirken zu lassen, um eine bessere Dispergierung des Feststoffs in Wasser zu erhalten oder um eine gleichmäßigere Abscheidung des Polymeren auf dem zu verkapselnden Feststoff zu erreichen.

Die Reaktionszeiten betragen normalerweise 1 bis 10, meistens 2 bis 7 Stunden. Die Polymerisationsgeschwindigkeit kann dabei durch die Wahl der Temperatur und die Menge an Radikalstarter und Regler in an sich bekannter Weise gesteuert werden.

Man kann die erfindungsgemäß hergestellten mikroverkapselten Feststoffe je nach Anwendungszweck in Form der anfallenden wäßrigen Dispersionen verwenden, oder man kann sie zum Beispiel durch Sprüh− oder Gefriertrocknung trocknen und als Pulver einsetzen oder vor ihrer Verwendung in Wasser redispergieren.

Die erfindungsgemäßen mikroverkapselten Feststoffe können für viele Zwecke vorteilhaft eingesetzt werden. Dies gilt insbesondere für die verkapselten Farbmittelteilchen.

Erfindungsgemäß mikroverkapselte Pigmente eignen sich hervorragend zur Herstellung von Druckfarben (sowohl für Papier− als auch für Textildruck), Anstrichfarben und Lacken. Besonders günstig ist ihre Verwendung für wasserverdünnbare Systeme, da die wäßrigen Dispersionen dieser Pigmente sehr stabil und damit lagerbar sind und problemlos mit Wasser zu verdünnen sind. Die zu erhaltenden Farben und Lacke weisen hohe Farbstärke und gleichzeitig ausgezeichnetes Deckvermögen auf und zeichnen sich damit durch die besondere Wirtschaftlichkeit ihrer Anwendung aus.

Weiterhin können erfindungsgemäß verkapselte Pigmente vorteilhaft zur Herstellung von Tonern für die Elektrophotographie eingesetzt werden. Insbesondere bei der Erzeugung von Farbkopien wirkt sich nämlich die unterschiedliche elektrische Aufladbarkeit der verschiedenen Tonerpigmente nachteilig aus. Durch die Mikroverkapselung können diese Störungen deutlich verringert werden, da die Oberflächeneigenschaften und damit auch die Aufladbarkeit der Pigmentteilchen vereinheitlicht werden. Da die Pigmente bei der Tonerherstellung üblicherweise bei hohen Temperaturen (etwa 100 bis 200°C) in die sog. Tonerharze eingearbeitet werden müssen, empfiehlt sich die Mikroverkapselung mit schwer schmelzbaren Polymeren, d.h. die Monomere I werden bevorzugt zusammen mit den vernetzend wirkenden Monomeren II polymerisiert.

Auch beim Färben von Kunststoffen und Kunstfasern, insbesondere Polyamidfasern, können erfindungsgemäß mikroverkapselte Pigmente wirkungsvoll zum Einsatz kommen. Das Färben erfolgt hier durch Einarbeiten der Pigmente direkt in die jeweiligen Polymerschmelzen bei hohen Temperaturen bis über 300°C häufig unter Verwendung von Extrudern. Dabei können sich nichtverkapselte Pigmente teilweise auflösen oder mit der Polymerschmelze reagieren, was zu einem Farbstärkeverlust führt. Durch eine temperaturstabile Mikroverkapselung können auch unter diesen Bedingungen nicht stabile Pigmente wirksam geschützt werden. Auch hier werden die Monomere I vorzugsweise zusammen mit den vernetzenden Monomeren II polymerisiert.

Eine vorteilhafte Anwendung erfindungsgemäß mikroverkapselter Farbbildner besteht in der Herstellung von wärmeempfindlichen Aufzeichnungsmaterialien. Dabei handelt es sich in der Regel um Papier oder Kunststoffolien, die durch Aufstreichen der wäßrigen Dispersion von Farbbildner und von Farbentwickler (Elektronenakzeptoren wie vor allem Phenolderivate und organische Säuren und deren Salze) beschichtet worden sind. Durch punktuelle Wärmeeinwirkung mit einem Thermodrucker wird die farbgebende Reaktion zwischen den beiden Komponenten ausgelöst. Eine ungewünschte Vorabentwicklung, d.h. eine qualitätsvermindernde Hintergrundanfärbung bereits bei der Herstellung des Thermopapiers kann durch Mikroverkapselung des Farbbildners verhindert werden. Um die erforderliche farbgebende Reaktion zu ermöglichen, müssen die Kapselwände leicht schmelzbar sein, d.h. sie bestehen bevorzugt aus Polymerisaten der Monomere I.

Beispiele

A) Herstellung von Mikrokapseln mit Feststoff – Kern

Die in den folgenden Beispielen für die wasserlöslichen Polymere aufgeführten K – Werte wurden jeweils nach H. Fikentscher, Cellulosechemie, Band 13, S. 48 – 64 und 71 – 74 (1932) in 1 gew. – %iger wäßriger Lösung (bzw. bei K – Werten kleiner 30 in 5 gew. – %iger wäßriger Lösung) bei 25˚C bestimmt.

Beispiel 1

55 g C.I. Pigment Yellow 185 (Isoindolingelb, Paliotol® D 1155, BASF) und 6 g der 30 gew. – %igen wäßrigen Lösung eines Phenolsulfonsäurekondensats (Tamol®DN, BASF) wurden in 53 g Wasser bei Raumtemperatur mit einem Dissolver bei 4000 Upm 2 min in einem Becherglas dispergiert. Nach Zugabe einer Lösung von 4 g Polyvinylpyrrolidon (K – Wert 90) in 69 g Wasser wurde weitere 25 min dispergiert. Nach weiterer Zugabe von 13 g Methylmethacrylat, 5,6 g 1,4 – Butandioldiacrylat, 0,14 g Azobisisobutyro – nitril und 0,2 g Dimethyl – 2,2' – azobisisobutyrat wurde noch 30 min dispergiert.

Dann wurde die Dispersion in einem Glaskolben mit Propellerrührer (400 Upm) auf 60˚C erhitzt und 2 h bei dieser Temperatur gehalten. Anschließend wurde noch 4 h bei 65˚C nachpolymerisiert.

Man erhielt mikroverkapseltes Pigment mit einer Teilchengröße von < 1 bis etwa 100 $\mu$m.

Beispiel 2

60,5 g C.I. Pigment Red 81:1 (C.I. 45160:3, Fanal® Rosa D 4830, BASF) und 64 g Polyvinylpyrrolidon (K – Wert 30) wurden in 150 g Wasser in einem Dispermat (Zahnscheibe 3,5 cm Durchmesser, 5000 Upm) 1 h dispergiert. Anschließend wurde die Zahnscheibe gegen eine Teflonscheibe (9 cm Durchmesser) ausgetauscht, Glaskugeln (3 mm Durchmesser) wurden zugegeben und dann wurde noch 1 h bei 3000 Upm dispergiert. Nach Zugabe von 6 g Tamol DN wurde analog Beispiel 1 mit den dort genannten Monomeren polymerisiert.

Man erhielt mikroverkapseltes Pigment mit einer Teilchengröße von < 1 bis etwa 3 $\mu$m.

Beispiel 3

55 g C.I. Pigment Red 81:1 (wie Beispiel 2) und 64 g einer nichtneutralisierten Polyacrylsäure (K – Wert 20) wurden in 240 g Wasser in einem Dispermat (Teflonscheibe 9 cm Durchmesser, 300 g Glaskugeln 3 mm Durchmesser, 3500 Upm) 3 h dispergiert.

Nach Zugabe von 13,1 g Methylmethacrylat, 5,6 g 1,4 – Butandioldiacrylat, 0,17 g tert. – Butylperoxypi – valat und 208 g Wasser wurde die Dispersion in einem Glaskolben mit Propellerrührer (400 Upm) auf 59˚C erhitzt und 2 h bei dieser Temperatur gehalten. Anschließend wurde noch 4 h bei 62˚C nachpolymerisiert.

Man erhielt mikroverkapseltes Pigment mit einer Teilchengröße von < 1 bis etwa 5 $\mu$m.

Bei den in Tabelle 1 aufgeführten Beispielen 4 bis 6 erfolgten Dispergierung und Mikroverkapselung von 55 g C.I. Pigment Red 81:1 analog Beispiel 3.

Tabelle 1

| Bsp | Dispergierung – Zugabe von | Verkapselung – Zugabe von | Teilchengröße des mikroverkapselten Pigments |
|---|---|---|---|
| 4 | 64 g Methylvinylether/Maleinsäurenatriumsalz-1:1-Copolymerisat (MG 7000, GPC) 291 g Wasser | 13,1 g Methylmethacrylat 5,6 g 1,4-Butandioldiacrylat 0,17 g tert.-Butylperoxypivalat 136 g Wasser | < 1 – etwa 5 µm |
| 5 | 64 g Maleinsäureanhydrid/Olefin-Copolymerisat (Sokalan® CP9, BASF) 291 g Wasser | wie Beispiel 4 | < 1 – etwa 5 µm |
| 6 | 66 g Polyvinylalkohol (98 % hydrolysiert, mit einer Viskosität von 4 mPas in 4 gew.-%iger wäßriger Lösung, Mowiol® 4-98, Hoechst) 264 g Wasser | 13,1 g Methylmethacrylat 5,6 g 1,4-Butandioldiacrylat 0,17 g tert.-Butylperoxypivalat 170 g Wasser | < 1 – etwa 10 µm |

Beispiele 7 bis 12

Bei den in Tabelle 2 aufgeführten Beispielen 7 bis 12 erfolgte die Dispergierung von 27,5 g C.I. Pigment Yellow 185 (wie Beispiel 1) analog Beispiel 2.

Nach weiterer Zugabe eines Dispergierhilfsmittels wurde die Mikroverkapselung analog Beispiel 3 vorgenommen.

Tabelle 2

| Bsp | Dispergierung – Zugabe von | Zugabe von | Verkapselung – Zugabe von | Teilchengröße des mikroverkapselten Pigments |
|---|---|---|---|---|
| 7 | 2 g Polyvinylpyrrolidon (K-Wert 17) <br> 184 g Wasser | 3 g Tamol DN <br> 50 g Wasser | 6,6 g Methylmethacrylat <br> 2,8 g 1,4-Butandioldi-acrylat <br> 0,085 g tert.-Butylperoxy-pivalat | < 1 – etwa 3 μm |
| 8 | 33 g Vinylpyrrolidon/Vinyl-acetat-1,5:1-Copolymeri-sat (K-Wert 25) <br> 146 g Wasser | 3 g Tamol DN <br> 70 g Wasser | wie Beispiel 7 | < 1 – etwa 5 μm |
| 9 | 33 g Polyvinylpyrrolidon (K-Wert 30) <br> 1,1 g Cetyltrimethylammonium-bromid <br> g Wasser | wie Beispiel 7 | wie Beispiel 7 | < 1 – etwa 5 μm |
| 10 | 33 g Polyvinylpyrrolidon (K-Wert 30) <br> 1,65 g Natriumlaurylpolyglykol-ethersulfat (mit 50 EO-Einheiten) <br> 415 g Wasser | wie Beispiel 7 | wie Beispiel 7 | < 1 – etwa 3 μm |

| Bsp | Dispergierung – Zugabe von | Zugabe von | Verkapselung – Zugabe von | Teilchengröße des mikroverkapselten Pigments |
|---|---|---|---|---|
| 11 | 33 g Polyvinylpyrrolidon (K–Wert 30)) 77 g Wasser | 3 g Tamol DN 200 g Wasser | 10 g Styrol 5 g n–Butylacrylat 0,14 g tert.–Butylperoxy-pivalat | < 1 – etwa 8 μm |
| 12 | wie Beispiel 11 | wie Beispiel 11 | 7 g Styrol 5 g 1,4–Butandiol-diacrylat 0,14 g tert.–Butylperoxy-pivalat | < 1 – etwa 8 μm |

Beispiel 13

55 g C.I. Pigment Blue 15:3 (C.I. 74160, Heliogen® Blau K 7090, BASF) und 66 g Polyvinylpyrrolidon (K – Wert 30) wurden in 154 g Wasser in einem Dispermat (Teflonscheibe 9 cm Durchmesser, 275 g Glaskugeln 3 mm Durchmesser, 3500 Upm) 3,5 h dispergiert. Dann wurden zunächst 6 g Tamol DN und 150 g Wasser und anschließend 13,1 g Methylmethacrylat, 5,6 g 1,4 – Butandioldiacrylat und 0,17 g tert. – Butylperoxypivalat zugegeben.

Die Polymerisation erfolgte analog Beispiel 3.

Man erhielt mikroverkapseltes Pigment mit einer Teilchengröße von < 2 bis etwa 6 μm.

Beispiel 14

55 g C.I. Pigment Yellow 184 (Spinellpigment, Sicopal® Gelb L1112, BASF) und 66 g Vinylpyrrolidon/Vinylacetat – 1,5:1 – Copolymerisat (K – Wert 25) wurden in 154 g Wasser in einem Disper – mat (Teflonscheibe 9 cm Durchmesser, 3500 Upm) 3 h dispergiert. Dann wurden zunächst 6 g Tamol DN und anschließend 13,1 g Methylmethacrylat, 5,6 g 1,4 – Butandioldiacrylat und 0,17 g tert. – Butylperoxypi – valat zugegeben.

Die Polymerisation erfolgte analog Beispiel 3.

Man erhielt mikroverkapseltes Pigment mit einer Teilchengröße von < 1 bis etwa 25 μm.

Beispiele 15 bis 17

Bei den in Tabelle 3 aufgeführten Beispielen 15 bis 17 erfolgte die Dispergierung von 55 g des jeweils angegebenen Pigments in der ebenfalls angegebenen Menge Wasser analog Beispiel 14 mit 66 g Vinylpyrrolidon/Vinylacetat – 1,5:1 – Copolymerisat (K – Wert 25). Die weitere Behandlung wurde ebenfalls analog Beispiel 14 mit dem dort angegebenen Monomeren/Starter – Gemisch durchgeführt.

| Bsp | Pigment | Dispergierung in | Teilchengröße des mikroverkapselten Pigments |
|---|---|---|---|
| 15 | C.I. Pigment Red 101 (C.I.77491, Sicotrans® Rot L2715D, BASF) | 264g Wasser | < 1 – etwa 3 μm |
| 16 | Titandioxid RN43 (Kronos Titan) | 154g Wasser | < 1 – etwa 5 μm |
| 17 | C.I. Pigment Black 11 (C.I.77499, Magnetschwarz S0045, BASF) | 154g Wasser | < 1 – etwa 5 μm (in Wasser lockere Agglomerate) |

Beispiel 18

55 g des Diaminofluorans Pergascript® Schwarz I–R (Ciba–Geigy) und 66 g Polyvinylpyrrolidon (K–Wert 30) wurden analog Beispiel 3 in 154 g Wasser dispergiert. Die weitere Behandlung erfolgte analog

12

Beispiel 13.

Man erhielt mikroverkapselten Farbbildner mit einer Teilchengröße von < 1 bis etwa 25 $\mu$m.

B) Prüfung der Mikroverkapselung

1. Prüfung der Farbstärke von Aufstrichen erfindungsgemäß mikroverkapselter Pigmente

Von den in Tabelle 4 aufgeführten mikroverkapselten Pigmenten wurden wäßrige Dispersionen des ebenfalls dort aufgeführten Pigmentgehalts mit Hilfe einer 18 $\mu$m – Rollrakel auf weißes Streichrohpapier gestrichen. Diese Aufstriche wurden dann an der Luft getrocknet.

Die so erhaltenen Papiere wurden mit einem Elrepho – Filterphotometer (Fa. Zeiss) vermessen. Nach DIN 5033 wurden über die Remissionsgerade $R_X$, $R_Y$ und $R_Z$ die Normfarbwerte X, Y und Z bestimmt, aus denen die Lage in L\*a\*b\* – Farbraum (CIE 1976) berechnet wurde. Die Sättigung C\* = $(a^{*2} + b^{*2})^{1/2}$ kann als Maß für die Farbstärke betrachtet werden.

Zum Vergleich wurden jeweils Dispersionen der unverkapselten Pigmente aufgerakelt, die durch Dispergierung in Gegenwart von Polyvinylpyrrolidon (K – Wert 30) hergestellt wurden.

Die Ergebnisse sind in Tabelle 4 zusammengestellt.

Tabelle 4

| Pigment aus Bsp. | Konz. der wäßrigen Dispersion [Gew.-%] | L\* | a\* | b\* | C\* |
|---|---|---|---|---|---|
| 2 | 5 | 36 | 39 | 22 | 45 |
| Vergleich (gelb) | 5 | 42 | 37 | 11 | 38 |
| 7 | 2 | 81 | −15 | 90 | 91 |
| 8 | 2 | 81 | −14 | 94 | 95 |
| 10 | 2 | 80 | −14 | 81 | 82 |
| 11 | 2 | 81 | −12 | 62 | 63 |
| 12 | 2 | 81 | −13 | 78 | 79 |
| Vergleich (rosa) | 2 | 80 | −15 | 80 | 82 |

2. Prüfung eines erfindungsgemäß mikroverkapselten Farbbildners

Die in Beispiel 18 erhaltene Farbbildner – Dispersion (28,7 gew. – %ig) wurde mit einer 15 $\mu$m – Lackhantel auf Clay – Nehmerpapier (Fa. Köhler, Oberkirch), das bereits den Entwickler enthält, aufgetragen. Das Papier verfärbte sich dabei nicht.

Auch nach dem Besprühen mit als Lösungsmittel wirkendem Dodecylbenzol wurden nur wenige schwarze Punkte beobachtet.

Der Vergleichsversuch mit unverkapseltem Pergascript Schwarz I – R ergab bereits ohne Besprühen mit Dodecylbenzol eine intensive Schwarzfärbung des Nehmerpapiers.

## Patentansprüche

1. Mikrokapseln mit Feststoff – Kern, erhältlich durch Suspensionspolymerisation von
   A) 30 bis 100 Gew. – % eines oder mehrerer Vinylmonomerer (Monomere I),
   B) 0 bis 70 Gew. – % eines oder mehrerer bi – oder polyfunktioneller Monomerer (Monomere II) und
   C) 0 bis 40 Gew. – % sonstiger Monomerer (Monomerer III),
   wobei die Feststoffteilchen, die Monomeren und ein oder mehrere öllösliche Radikalstarter in Wasser dispergiert werden und die Polymerisation auf übliche Weise durch den thermischen Zerfall des Radikalstarters ausgelöst und gesteuert wird.

2. Mikrokapseln mit Feststoff − Kern nach Anspruch 1, in welchen die Feststoffteilchen feste Farbmittel − teilchen sind.

3. Verfahren zur Herstellung von Mikrokapseln mit Feststoff − Kern gemäß Anspruch 1, dadurch gekenn − zeichnet, daß man Feststoffteilchen, eine Mischung aus
    A) 30 bis 100 Gew. − % eines oder mehrerer Vinylmonomerer (Monomere I),
    B) 0 bis 70 Gew. − % eines oder mehrerer bi − oder polyfunktioneller Monomerer (Monomere II) und
    C) 0 bis 40 Gew. − % sonstiger Monomerer (Monomere III)
und einen oder mehrere öllösliche Radikalstarter in Wasser dispergiert, danach die Polymerisation auf übliche Weise durch den thermischen Zerfall des Radikalstarters auslöst und steuert und die hierbei gebildeten Kapseln aus Polymerisatschale und Feststoff − Kern gewünschtenfalls in an sich bekannter Weise von der wäßrigen Phase abtrennt und trocknet.

4. Verwendung der Mikrokapseln mit Feststoff − Kern gemäß Anspruch 1 oder 2 zur Herstellung von Druckfarben, Anstrichfarben und Lacken.

5. Verwendung der Mikrokapseln mit Feststoff − Kern gemäß Anspruch 1 oder 2 zur Herstellung von Tonern für die Elektrophotographie.

6. Verwendung der Mikrokapseln mit Feststoff − Kern gemäß Anspruch 1 oder 2 zum Färben von Kunststoffen und Kunstfasern.

7. Verwendung der Mikrokapseln mit Feststoff − Kern gemäß Anspruch 1 oder 2 zur Herstellung von wärmeempfindlichen Aufzeichnungsmaterialien.

Europäisches
Patentamt

**EUROPÄISCHER RECHERCHENBERICHT**

Nummer der Anmeldung

| **EINSCHLÄGIGE DOKUMENTE** | | | EP 92118950.2 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
| P,X<br><br>D | EP - A - 0 457 154<br>(BASF)<br>* Ansprüche 1,5-7 *<br>& DE-A-4 015 753<br>-- | 1-4 | B 01 J 13/18<br>C 08 K 9/10<br>B 41 M 5/165 |
| P,X | US - A - 5 068 067<br>(AKIRA KAWAI et al.)<br>* Zusammenfassung *<br>-- | 1,3,4 | |
| A | EP - A - 0 341 648<br>(DRESCHER GESCHÄFTSDRUCKE)<br>* Ansprüche 1-4,16 *<br>-- | 1,3 | |
| D,A | US - A - 4 771 086<br>(ROBERT W. MARTIN)<br>* Ansprüche 1,5 *<br>-- | 1,3 | |
| D,A | US - A - 4 680 200<br>(JITKA SOLC)<br>* Ansprüche 1,5,6 *<br>-- | 1,3 | RECHERCHIERTE SACHGEBIETE (Int Cl⁵) |
| D,A | US - A - 4 421 660<br>(JITKA SOLC)<br>* Zusammenfassung *<br>---- | 1;3,4 | B 01 J<br>C 08 K<br>B 41 M |

Der vorliegende Recherchenbericht wurde für alle Patentansprüche erstellt.

| Recherchenort<br>WIEN | Abschlußdatum der Recherche<br>10-02-1993 | Prüfer<br>REIF |
|---|---|---|